# EUROPÄISCHE PATENTSCHRIFT

(11) **EP 1 594 783 B1**
(45) Veröffentlichungstag und Bekanntmachung des Hinweises auf die Patenterteilung: **13.06.2012**
(21) Anmeldenummer: 04709607.8
(22) Anmeldetag: 10.02.2004
(51) Int. Cl.: B65G 69/00

(54) **ANFAHRSCHUTZ**
DRIVE PROTECTION DEVICE
PROTECTION ANTI-TAMPONNEMENT

(30) Priorität: 10.02.2003 DE 10305565; 24.03.2003 DE 10313268
(43) Veröffentlichungstag der Anmeldung: 16.11.2005
(60) Teilanmeldung: 11009215.2
(73) Patentinhaber: Grunewald, Niclas, 20146 Hamburg (DE)
(72) Erfinder: Grunewald, Niclas, 20146 Hamburg (DE)
(74) Vertreter: Vonnemann, Gerhard
(86) Internationale Anmeldenummer: PCT/EP2004/001214
(87) Internationale Veröffentlichungsnummer: WO 2004/069703

(56) Entgegenhaltungen:
- EP-A- 0 547 428
- FR-A- 2 689 913
- US-A- 2 879 985
- US-A- 4 293 969
- US-A- 6 006 389

## Beschreibung

Die Erfindung betrifft einen höhenverstellbaren Anfahrpuffer, insbesondere zum Schutz bei Be-und Entladevorgängen von Fahrzeugen bei Gebäudeöffnungen, bestehend aus einem Montagerahmen und einem höhenverstellbaren Pufferblock für eine Verladerampe oder eine Überladebrücke wobei der Pufferblock als ein im wesentlichen horizontaler Rammbalken, insbesondere mit mindestens einem Anfahrkissen ausgebildet ist, der im Bereich seiner Enden höhenverstellbar gelagert ist

Außerdem betrifft die Erfindung ein Verfahren zum Betrieb eines Anfahrschutzes.

Ein gattungsgemäßer Anfährpuffer ist aus der EP-A-0 547 428 bekannt

Die Beladung von LKW erfolgt an Lagerhäusern fast ausschließlich an Verladerampen, die in etwa die Höhe der Fahrzeugladefläche haben sollten. Auch sind überladebrücken bekannt, die eine Anpassung zwischen dem Niveau der Verladerampe und dem sich mit dem Ladezustand ändernden Niveau einer Fahrzeugladefläche ermöglichen.

Aus dem deutschen Gebrauchsmuster DE 92 01 381 U1 ist ein Anfahrpuffer für Rampen bekannt geworden, der sich den Auf- und Abwärtsbewegungen des Fahrzeuges beim Be-und Entladen anpasst und so Schäden am Puffer und dessen Befestigung verhindert In der Ruhestellung, d. h. der Normalstellung, befindet sich dieser Puffer auf Rampenhöhe und kann nunmehr von einem LKW mit nach oben oder mit nach unten genommen werden. Eine Einstellung des Puffers in einer Höhe über der Rampe oder unter die Rampe ist bei dieser bekannten Anordnung nicht möglich. Es kommt jedoch immer wieder vor, dass die Rampenhöhe deutlich niedriger ist als die Höhe der Fahrzeugladefläche, was zur Folge hat, dass das Fahrzeug die Rampenkante übedährt und dadurch unter Umständen Tor und Fassade des Gebäudes beschädigt oder auch Schäden am Fahrzeug auftreten können. Um dies zu vermeiden, schlägt die deutsche Patentschrift DE 195 48 121 vor, daß der Pufferblock in der Ausgangslage über die Oberfläche der Verladerampe oder Überladebrücke einstellbar ist Ein solcher Anfahrpuffer, der über die Kante der Rampe oben vorsteht, steht beim Öffnen der LKW-Tür störend im Wege. Da der Pufferblock also beim Verladen stört, muß er abgesenkt werden, so daß seine Oberkante mit der Rampenhöhe abschließt und den Ladevorgang nicht mehr behindern kann. Nur unzureichend gelöst und damit nachteilig ist nach dem Stand der Technik das Problem, das sich beim Absenken des Puffers stellt, wenn ein LKW den Puffer unter Last hält Im Stand der Technik kann der Puffer unter Druck durch das angefahrene Fahrzeug nur abgesenkt werden, wenn durch Entfernen eines Keils oder Umlegung eines Exzenters Spiel in die Führung gebracht wird, um so eine Absenkung zu ermöglichen.

Es kommt aber auch vor, dass die Ladefläche andockender LKW niedriger als die Höhe der Rampenkante ist In solchen Fällen sollten auch Fahrzeug und Gebäude vor Schäden beim Andocken geschützt werden können.

Eine besondere Problematik stellt sich, wenn zur Montage eines Anfahrpuffers aus besonderen Gründen, z.B. bei temperaturgeführten Logistikketten wie an Kühlhäuser, keine Gebäudewand zur Verfügung steht. Derartige Vorrichtungen zum Dichten des Spalts zwischen dem Rand einer Gebäudeöffnung und dem Heck eines herangefahrenen Fahrzeuges sind beispielsweise aus der DE 33 42 732 A1, der DE 37 10 528 A1, der DE 30 49 358 C2, der DT 25 55 201 A1, der DE 199 06 486 C1 bekannt. Allen diesen Vorrichtungen ist gemeinsam, dass sie den Spalt zwischen der Gebäudeöffnung und einem an diese Gebäudeöffnung herangefahrenen Fahrzeuge lediglich seitlich und oben dichten. Unten wird der Spalt zwischen der Gebäudeöffnung und dem Fahrzeug durch eine Überladebrücke teilweise verschlossen, deren Plattform auf die Ladefläche eines Fahrzeugs aufgelegt wird, um das Fahrzeug zu be- oder entladen.

Nachteilig an diesen bekannten Konzepten ist, dass zwischen den seitlichen Dichtungen und der Überladebrücke Öffnungen bleiben, durch die ein Luftaustausch zwischen der Aussenluft und dem Inneren der Verladestation stattfinden kann. Aufgrund der notwendigen Lagetoleranzen eines an die Gebäudeöffnung heranfahrenden Fahrzeugs müssen die Überfadebrücken in ihrer Breite stets schmaler sein als die Ladefläche des Fahrzeugs. Die genannten Öffnungen sind also systembedingt notwendig. Insbesondere bei Logistikketten, die beispielsweise tiefgefrorene Ware bei einer bestimmten Temperatur oder ein bestimmtes Klima für das Transportgut aufrecht verhalten müssen, werden diese Öffnungen als nachteilig empfunden. Ausserdem kann es beispielsweise bei Kühlhäusern zum Befrieren der Überladebrücken kommen, weil die eintretende Warmluft vorhandene Feuchtigkeit an der Oberfläche der Übertadebrücke kondensiert. Der so entstehende Tau kann auch gefrieren, was die Arbeitssicherheit gefährdet Für derartige Situationen sind durch GM 7425832.5 oder DE 2306130 beispielsweise Dichtungen bekannt, die den Spalt zwischen Gebäudeöffnung und einem angedockten Fahrzeug oben und seitlich schliessen. Zusätzlich ist aus der US 4,293, 969 eine aufblasbare Dichtung bekannt, die zwischen einem Plateau einer Überladebrücke und der Sohle der Einbaugrube abdichtet

Nachteilig an den bekannten Lösungen ist, dass immer seitlich des Fahrzeughecks und der Überladebrücke unten eine ungedichtete Öffnung verbleibt.

Es besteht jedoch das dringende Bedürfnis, den gesamten Verladevorgang auch bei unterschiedlichen Bausituationen zu automatisieren und die Sicherheit innen wie außen zu verbessern und gleichzeitig zu verhindern, dass an andockenden Fahrzeugen Schäden durch den Rammschutz entstehen.

Diese Aufgabe wird bei einem höhenverstellbarer Anfahrschutz, insbesondere zum Schutz von Fassaden beim Andocken von Fahrzeugen an Gebäudeöffnungen, bestehend aus einem ortsfestem Montagerahmen und einem höhenverstellbaren Pufferblock für eine Verladerampe oder eine Überladebrücke, wobei der Pufferblock als ein im wesentlichen horizontaler Rammbalken, insbesondere mit mindestens einem Anfahrkissen ausgebildet ist, der im Bereich seiner Enden höhenverstellbar gelagert ist, dadurch gelöst, dass der Rammbalken an zwei beabstandeten, vorzugsweise als Säulen ausgebildeten, ortsfesten Montagerahmen höhenverstellbar gelagert ist und einen Verstellweg aufweist, der sowohl eine horizontale als auch vertikale Stellwegkomponente aufweist wobei insbesondere der aufwärts gerichtete Verstellweg auf mindestens einem Teil des Weges einen größeren Abstand zu einer vertikalen Montageebene aufweist als der abwärts gerichtete Verstellweg. Der Rammbalken überspannt dabei vorzugsweise die gesamte Gebäudeöffnung. Er kann beispielsweise mehr als die doppelte Breite einer Überladebrücke aufweisen. Vorteilhafterweise dient der Rammbalken in seiner Ruheposition oberhalb einer Brückenplatte der Überladebrücke gleichzeitig als Absturzsicherung für auf der Brückenplatte befindliche Ladegeräte wie Gabelstapler, so dass die Betriebssicherheit innerhalb des Gebäudes erhöht wird. Dadurch, dass mindestens ein Anfahrkissen auf einem im wesentlichen horizontalen Rammbalken angeordnet ist, der an einem Montagerahmen höhenverstellbar gelagert ist, ist die Betriebssicherheit auch in denjenigen Fällen gewährleistet, wo die Brückenplatte die gesamte Breite eines Lastkraftwagens überspannt und die bekannten Anfahrpuffer wirkungslos sind. In diesen Fällen werden der LKW und seine Rücklichter vor Schäden geschützt. Der Rammbalken schützt somit nicht nur innen, sondern auch aussen die Überladebrücke das Gebäude und die anfahrenden Fahrzeuge vor Beschädigungen. Die horizontale Stellwegkomponente dient zum Entlasten des Anfahrpuffers. Die vertikale Stellwegkomponente erlaubt die Höhenverstellung. Insbesondere die Ausgestaltung, dass der aufwärts gerichtete Verstellweg auf mindestens einem Teil des Weges einen grösseren Abstand zur Montageebene aufweist, als der abwärts gerichtete Verstellweg, ermöglicht eine eindeutige Schaltfolge der verfahrweg den Antriebselementen zuzuordnen. Beim Hochfahren wird dann erst die horizontale nach außen gerichtete Stellwegkomponente durchfahren bevor die vertikale Verstellung erfolgt Beim Runterfahren wird ebenfalls zuerst die horizontale aber nach innen gerichtete Stellwegkomponente durchfahren und dadurch ggf. der Pufferblock entlastet, bevor der Rammbalken nach unten in seine untere Endlage bewegt wird. In der unteren Lage des Rammbalkens besteht deshalb kein Kontakt zum Fahrzeug.

Die Maßnahme, daß der Montagerahmen feststehend ausgebildet ist und eine Führungsschablone aufweist, an der sich zwei vertikal beanstandete veränderbare Stützflächen einer lageveränderlichen Baugruppe abstützen, erlaubt eine vorteilhafte direkte Einleitung auftretender Stoßkräfte in den Baukörper und eine besonders robuste Ausführung, insbesondere wenn die lageveränderliche Baugruppe aus dem Anfahrpuffer und einem Teil des Linearantriebs gebildet ist, und wobei vorzugsweise eine Stützfläche oder beide am Pufferblock angeordnet sind, werden die auftretenden Pufferkräfte über diese definierten Stützflächen, die entsprechend groß und vorzugsweise eben ausgebildet sind, in den Montagerahmen eingeleitet Der Stellantrieb bleibt vorteilhaft verschont von diesen Kräften.

Die Funktionssicherheit wird noch dadurch erhöht, daß der Pufferblock eine Mitnahmeöffnung aufweist, die in vertikaler Richtung größer als in horizontaler Richtung ausgebildet ist und in der ein Mitnahmeelement eingreifend angeordnet ist, das eine Verbindung zum beweglichen Teil des Stellantriebs aufweist. Die Entlastung des Puffers wird dadurch erleichtert. Der Pufferblock kann vorteilhaft weit Ober die obere Rampenkante hinausragen, weil eine Stützfläche als Drehmomentsstütze einer auf den Pufferblock ausgeübten Anfahrkraft ausgebildet ist. Es entsteht nämlich durch die Anfahrkräfte dadurch, daß der Pufferblock eine Stoßfläche aufweist, deren Mitteachse oberhalb der Mitnahmeöffnung angeordnet ist, ein Moment um eine horizontale Achse, das auf diese konstruktiv günstige Weise in den Baukörper über den Montagerahmen eingeleitet wird.

Wenn der Antrieb des Anfahrpuffers eine Wirkverbindung zu einer Steuerung aufweist, der das Signal eines Sensor zur Erkennung eines herangefahrenen Fahrzeugs aufgeschaltet ist, kann die Bedienung des Puffers vorteilhaft automatisiert werden. Die Steuerung fährt den Anfahrpuffer aus dem störenden Bereich heraus, sobald der Sensor die Anwesenheit eines Fahrzeugs signalisiert und beispielsweise zusätzlich eine Zeitspanne abgelaufen ist. Sobald der LKW dann seine Andockposition verlassen hat, wird der Rammbalken automatisch in seine obere Sicherheitsposition gefahren.

Die Anfahrpuffer lassen sich auch vorteilhaft aus dem Schwenkbereich der LKW-Hintertür bewegen, wenn der Abstand der Säulen größer als der Abstand der Anfahrkissen ist, vorzugsweise größer als die doppelte Breite eines LKW.

Die auftretenden Anfahrkräfte lassen sich mit Vorteil unabhängig von einem Gebäudefundament dadurch ableiten, dass die Säulen an ihrem unteren Ende auf der Verkehrsfläche befestigt sind. Zusätzliche strukturelle Stabilität wird erreicht, wenn die Säulen im Bereich ihres oberen Endes durch einen Stützbalken nach hinten abgestützt ausgebildet sind, der seinerseits vorzugsweise auf der Verkehrsfläche und/oder an einem Gebäudefundament befestigt ist

In Ausgestaltung der Erfindung ist vorgesehen, dass der Rammbalken ein Dichtungsteil, vorzugsweise verstellbares, insbesondere aufblasbares, aufweist, wobei das Dichtungsteil einen Spalt zwischen dem Rammbalken und der überladebrücke überbrückend ausgebildet ist. Auf diese Weise wird beim Be- oder Entladen in Fällen einer temperaturempfindlichen Logistikkette ein sicherer Abschluß gegenüber der Außenluft erreicht, so dass keine Luftfeuchtigkeit auf der Überladebrücke kondensieren oder ausfrieren und damit den sicheren Einsatz von beispielsweise Gabelstaplern oder Niederflurhubwagen gefährden kann. Einfach und robust lässt sich das Dichtungsteil gestalten, wenn das Dichtungsteil aufblasbar ausgebildet ist Ein solches Dichtungsteil passt sich mit Vorteil auch an Anbauten eines Fahrzeuges an, so dass es besonders gut dichtet und das Fahrzeug nicht beschädigt. Durch die Aufblasbarkeit kann sich das Dichtungsteil hervorragend an betriebs- und fahrzeugbedingte unterschiedliche Abstände zwischen Rammbalken und Fahrzeug/Überladebrücke anpassen, wobei zusätzliche mechanische Antriebe nicht erforderlich sind, da das Dichtungsmaterial durch die einströmende Luft in die dem Zuschnitt entsprechende Form gedrückt wird. Das Dichtungsteil überspannt dabei mit Vorteil noch die Breite der Überladebrücke, so dass es die sich seitlich der Überladebrücke vorhandenen Öffnungen zu einer dreiseitigen Dichtung der Gebäudeöffnung schließt

Diese Abdichtwirkung wird noch dadurch verbessert, daß das Dichtungsteil in der Aufsicht U-förmig ausgebildet ist und/oder vorzugsweise mit seinen freien Schenkeln in Richtung der Anfahrkissen - also zum LKW- zeigend ausgebildet ist. Das Dichtungsteil schmiegt sich so noch besser an ein Fahrzeug an. Auch dadurch, dass das Dichtungsteil breiter als die Überladebrücke ausgebildet ist, dichtet sie auch über die seitlichen Kanten der Überladebrücke hinaus.

Besonders vorteilhaft ist, wenn das Dichtungsteil breiter als die in der Gebäudeöffnung vorgesehene Überladebrücke ausgebildet ist Dann werden die vorhandenen Spalte rechts und links der Ladebrücke geschlossen. Das Dichtungsteil überspannt bevorzugt die gesamte Breite der Gebäudeöffnung. Das Dichtungsteil kann dabei als ein in der Höhe motorisch verstellbares Scherenelement und / oder ein Rollo aus aneinandergereihten Lamellen ausgestaltet sein. Ein Einsteigen in den Innenraum der Ladebucht wird durch das feste Rollo aus aneinandergereihten Lamellen wesentlich erschwert.

Einfach und robust aber lässt sich das Dichtungsteil gestalten, wenn das Dichtungsteil aufblasbar ausgebildet ist Ein solches Dichtungsteil passt sich mit Vorteil auch an Anbauten des Fahrzeugs an, so dass es besonders gut dichtet, Es beschädigt das Fahrzeug nicht und weist einen geringen Wärmedurchlass auf.

Mit Vorteil können auch bereits vorhandene Gebläse für das erfindungsgemäße Dichtungsteil genutzt werden, wenn weitere Dichtungsteile, vorzugsweise aufblasbare Dichtungsteile, um die Gebäudeöffnung angeordnet sind, so dass die Gebäudeöffnung allseitig umschlossen ist.

In Ausgestaltung der Erfindung ist zur Versorgung des Dichtungsteils mit Luft vorgesehen, dass das Dichtungsteil ein Luftgebläse mit einer Luftversorgungsleitung für das Dichtungsteil aufweist, wobei das Gebläse insbesondere reversierbar ausgebildet ist Dadurch, dass das Gebläse reversierbar ausgebildet ist, kann die Luft auch schnell wieder aus der Dichtung entfernt werden und das Fahrzeug die Ladeöffnung verlassen.

Die Inbetriebnahme der Dichtung kann vorteilhaft automatisiert werden, wenn das Gebläse über eine Wirkverbindung mit einer Steuerung der Überladebrücke verbunden ist wobei die Steuerung die Anwesenheit eines LKW detektierend ausgebildet ist Beispielsweise wird von der Steuerung das Gebläse dann in Betrieb gesetzt, wenn die Überladebrücke auf die Ladefläche des herangefahrenen LKW abgesenkt ist Sobald dann die Überladebrücke den Befehl zur Rückkehr in die Ruhelage erhält, kann gleichzeitig oder vorher auch das Gebläse ausgeschaltet werden, so dass die Dichtung aufgrund der durch die Auslassöffnungen weiter ausströmende Luft in sich zusammenfällt. Diese Zeit kann, falls gewünscht, weiter verkürzt werden, wenn das Gebläse kurze Zeit reversiert betrieben wird. Die Dichtung bläst sich demnach erst auf, wenn das Fahrzeug sich bereits in seiner Parkposition befindet und die Übertadebrücke auf die Ladefläche aufgelegt ist.

Die Verfahrensaufgabe wird durch die Merkmale der Porteutan - Sprüche 13 und/oder 14 gelöst. Dadurch, dass das Startsignal für das untere Dichtelement zum Anfahren der Dichtposition von der Steuerung erzeugt wird, vorzugsweise der Überladebrückensteuerung, erst wenn die Betriebsposition der Überladebrücke erreicht ist, insbesondere nach Ablauf einer Zeitspanne, läuft das Abdichten des Spaltes zwischen der Gebäudeöffnung und dem Fahrzeug weitgehend automatisch ab. Dies lässt sich dadurch verwirklichen, dass nach Erteilen des Absenkungsbefehls der Steuerung die Steuerung selbsttätig nach Ablauf einer voreingestellten Zeit das Signal zum Aufblasen erteilt

Auch das Außerbetriebsetzen des Dichtungstell erfolgt vorteilhafterweise weitgehend automatisch, wenn das Signal zum Rückfahren des unteren Dichtungsteils in die Ruhelage von der Überladebrückesteuerung erzeugt wird. Der Befehl wird beispielsweise von der Steuerung erteilt, sobald eine voreingestellte Zeit seit Betätigen des "Heben"-Tasters abgelaufen ist Dieser Vorgang lässt sich noch zeitlich dadurch verkürzen, dass das Rockfahren des Dichtungsteils in die Ruhelage durch Umkehrung des Gebläses erfolgt. Während des Betriebes verändert sich der Ladezustand des herangefahrenen Fahrzeuges. Aus diesem Grunde verändert sich auch das Niveau der Ladefläche. Das aufblasbare Dichtungsteil kann dieser Bewegung des Fahrzeugs aufgrund seiner eigenen Elastizität folgen und behält dadurch den Kontakt zum Fahrzeug. Anders liegt der Fall, wenn, beispielsweise aus Sicherheitsgründen, ein mechanisch stabiles Rollo als Dichtungsteil eingesetzt wird. Damit das Rollo keinen Schaden nimmt und trotzdem den Kontakt zum Fahrzeug beibehält, ist mit Vorteil vorgesehen, dass eine selbsttätige Lageregelung vorgesehen ist, die die Lage des Dichtungsteils an die sich verändernde Lage der Überladebrücke selbsttätig anpasst.

Die Erfindung wird in einer bevorzugten Ausführungsform unter Bezugnahme auf eine Zeichnung beschrieben, wobei weitere vorteilhafte Einzelheiten den Figuren der Zeichnung zu entnehmen sind. Funktionsmäßig gleiche Teile sind dabei mit denselben Bezugszeichen versehen.

Die Figuren der Zeichnung zeigen im einzelnen:
- Figur 1: eine Seitenansicht des erfindungsgemäßen Anfahrschutzes in der Anfahrsituation durch einen LKW,
- Figur 2: eine Seitenansicht des erfindungsgemäßen Anfahrpuffers in der Verladesituation des LKW,
- Figur 3: eine schematische Schnittdarstellung einer Seitenansicht des erfindungsgemäßen Anfahrschutzes in der Betriebsposition,
- Figur 4: eine schematische Schnittdarstellung einer Seitenansicht des erfindungsgemäßen Anfahrschutzes in der Anfährsituation für einen LKW,
- Figur 5: eine schematische Darstellung des Verstellweges des erfindungsgemäßen Anfahrschutzes,
- Figur 6: eine schematische Darstellung einer Aufsichtsicht des erfindungsgemäßen Anfahrpuffers,
- Figur 7: einen Vertikalschnitt durch eine alternative Ausgestaltung mit einem an Stützen geführten Rammbalken,
- Figur 8: eine frontale Ansicht der Ausgestaltung gemäß Figur 9,
- Figur 9: eine Aufsicht auf die Ausgestaltung gemäß Figur 8,
- Figur 10: eine frontale Ansicht einer vor die Gebäudeöffnung gesetzten Schleuse, jeweils in Ruhe- oder Betriebsstellung
- Figur 11: die Schleuse gemäß Figur 10 in einem Vertikalschnitt, jeweils in Ruhe oder Betriebsstellung
- Figur 12: die Schleuse gemäß Figur 10 als horizontaler Schnitt und
- Figur 13: eine schematische Darstellung der Gebläseluftführung zum erfindungsgemäßen Dichtungsteil

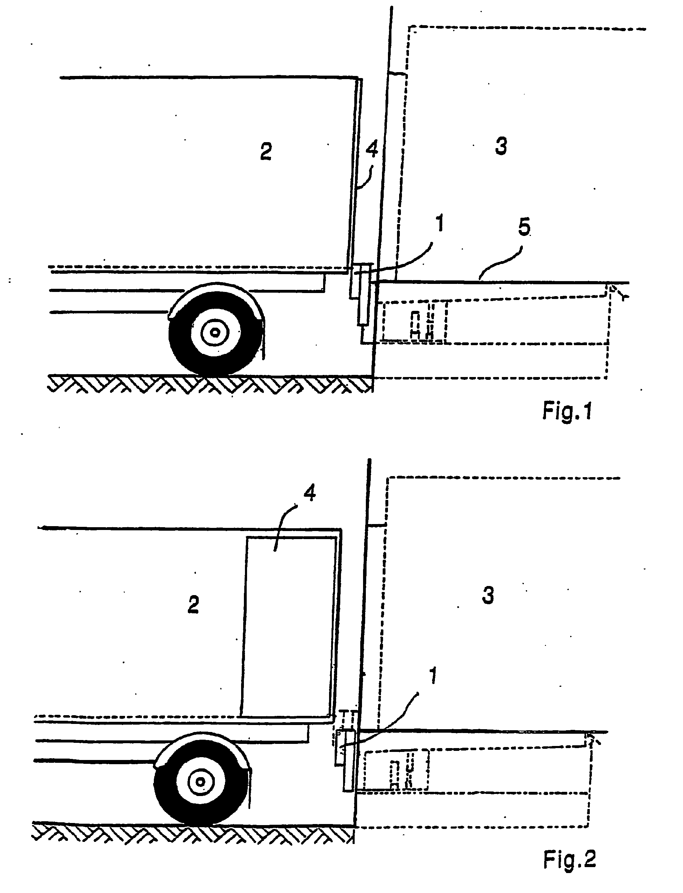

In den Figuren 1 und 2 bezeichnet 1 den erfindungsgemäßen Anfahrschutz, der zwischen einem LKW 2 und einem Gebäude 3 angeordnet ist. Die Figur 1 zeigt dabei eine Situation, in der der LKW mit geschlossenen Türen 4 zunächst an den Anfahrschutz 1 herangefahren ist. Die obere Kante des Anfahrpuffers ist dabei so positioniert, daß sie über das Niveau der Rampenkante 5 hinausragt Der Anfahrschutz hat dabei eine Höhe, die ausreicht, daß die Aufbauten des LKW gegen den Puffer gefahren werden können. Zum Öffnen der Türen 4 ist der Puffer jedoch im Wege. Deshalb wird der Anfahrschutz dann aus der Schutzposition gemäß Figur 1 in die Betriebsposition gefahren, die in Figur 2 dargestellt ist In dieser Lage kollidiert der Anfahrschutz nicht mehr mit den zu öffnenden Türen.

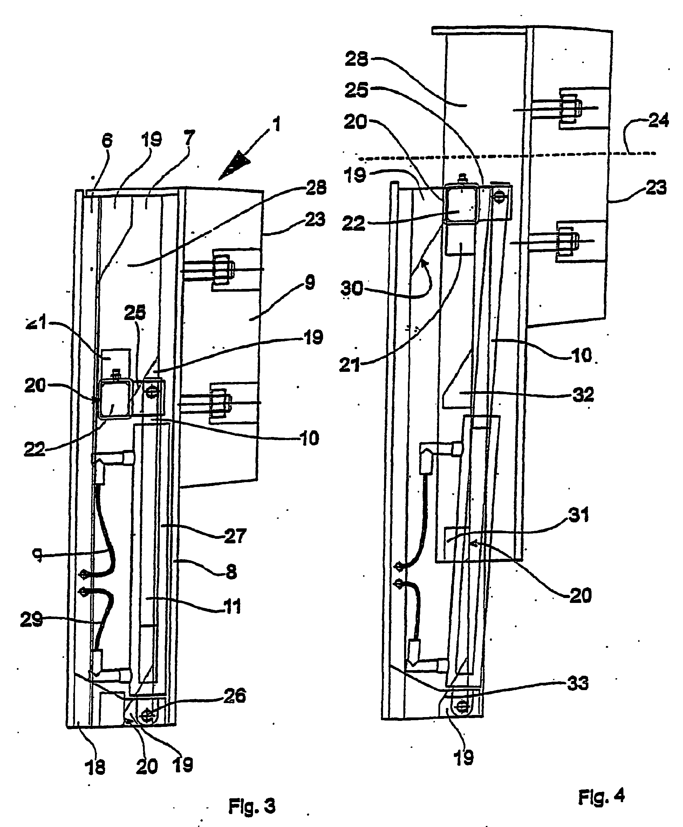

Die Konstruktion des erfindungsgemäßen Schutzes ist in Figur 3 als Vertikalschnitt dargestellt. Der Anfahrpuffer 1 besteht im wesentlichen aus einer ortsfesten Baugruppe 6 und einer beweglichen Baugruppe 7.

Zur beweglichen Baugruppe gehört ein Pufferblock 8, an dem das Anfahrkissen 9 angebracht ist. An dem Pufferblock 8 ist zur Bewegung desselben die Kolbenstange 10 eines Kolben-Zylinder-Antriebs 11 mittels einer Verbindung 25 schwenkbar befestigt. Dieser Stellantrieb 11 stützt sich auf der anderen Seite Ober das Schwenklager 26 des Zylinders 27 an dem Montagerahmen 18 ab, mit dem der Stellantrieb 11 schwenkbar verbunden ist, die die feststehende Baugruppe 6 bilden.

Zur Führung der Verstellbewegung ist am Montagerahmen 18 eine Führungsschablone 19 angeschweißt, die aus mehreren einzelnen Elementen besteht Die Schablone 19 führt ein Mitnahmeelement 22, daß in die Mitnahmeöffnung 21 einer am Pufferblock 8 angeschweißten Platte 28 eingreift. Das Mitnahmeelement 22 wird über die Verbindung 25 von der Kolbenstange 10 bewegt.

Um aus der in Figur 3 dargestellten Positionen in die Anfahrt-Positionen gemäß Figur 4 zu fahren, wird der Zylinder 27 zunächst über die Hydraulikschläuche 29 mit hydraulischer Flüssigkeit gespeist. Die Kolbenstange 10 fährt darauf aus und bewegt Ober Verbindung 25 das Mitnahmeelement in der Mitnahmeöffnung 21 solange in vertikale Richtung, bis das Mitnahmeelement 22 an der oberen Kante der Mitnahmeöffnung 21 anliegt. Erst dann bewegt sich auch der Pufferblock 8 zunächst vertikal nach oben, bis das Mitnahmeelement auf die Schräge 30 der Führungschablone 19 trifft Die Schablone 19 drängt das Mitnahmeelement nach außen, bis die Kolbenstange 10 ihre obere Endlage erreicht hat. In dieser Endlage stützt sich das Mitnahmeelement 22 auf der Stützfläche 20 der Schablone 19 ab.

Da die Mittelachse 24 der Stoßfläche 23 oberhalb des Mitnahmeelementes 22 angeordnet ist wird auf den Pufferblock 8 bei einem Stoß in Richtung der Mittelachse 24 ein Moment um die Achse des Mitnahmeelementes 22 ausgeübt. Um diese Kräfte aufzunehmen, ist an dem Pufferblock 8 eine Drehmomentstütze 31 vorgesehen, die sich an eine vertikal von der oben beschriebenen Stützfläche 20 beanstandeten weiteren Stützfläche 20 anlegt

Das Einfahren des Anfahrpuffers aus der in Figur 4 dargestellten Positionen in die gemäß Figur 3 gezeigten Lage erfolgt analog. Zunächst bewegt sich wiederum das Mitnahmeelement 22 innerhalb der Mitnahmeöffnung 21. Erst dann bewegt sich auch der Pufferblock 8 vertikal nach unten. Sobald das Mitnahmeelement 22 auf die Schräge 32 und die Drehmomentstütze 31 auf die Schräge 33 stößt, wird der Pufferblock 8 den Schrägen 32 und 33 folgend wieder in Richtung auf den Montagerahmen 18 gedrängt, bis die in Figur 3 gezeigte Lage erreicht ist.

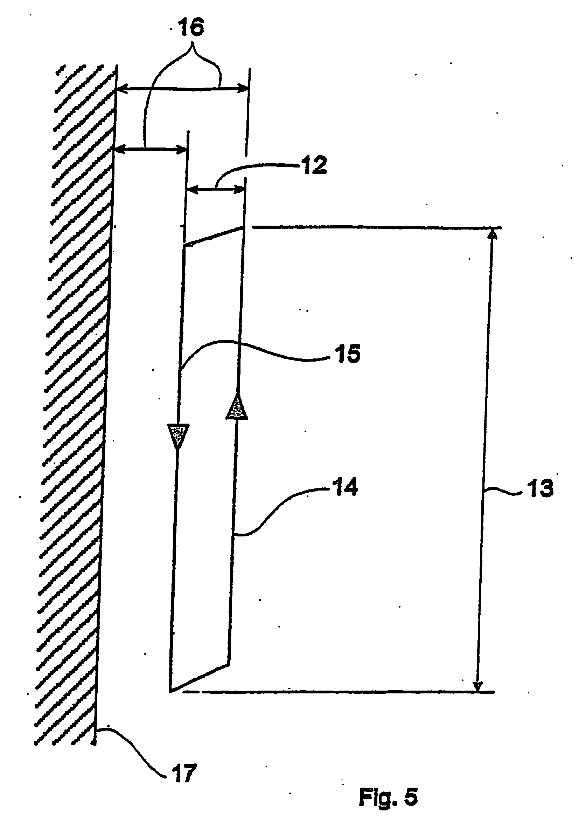

In Figur 5 ist der Verstellweg aus der Seitenansicht noch einmal anschaulich dargestellt Der aufwärts gerichtete Verstellweg 14 weist einen größeren Abstand 16 zur Montageebene 17 des Anfahrpuffers auf, als der abwärts gerichtete Versteitweg 15. Die horizontale Stellwegkomponente 12 ist aber wesentlich geringer als die vertikale Stellwegkomponente 13. Der Verstellweg kann je nach Erzeugungsweise der horizontalen Wegkomponente etwas unterschiedlich gestaltet sein. Alternative Antriebskonzepte sind weiter unten beschrieben.

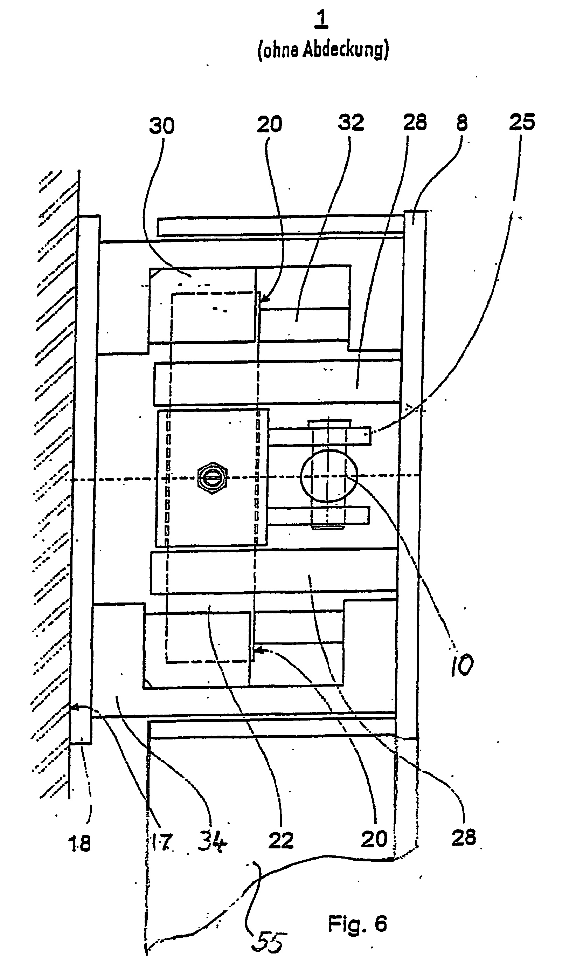

Eine Aufsicht auf den erfindungsgemäßen Anfahrpuffer ist in Figur 6 in seiner unteren Lage dargestellt In dieser Lage stützt sich der Pufferblock 8 über die U-förmigen Seitenteile 34 und den Montagerahmen 18 auf der Montageebene 17 ab. In der oberen Lage des Anfahrschutzes 1 stützt sich der Pufferblock 8 über die Platte 28 und das Mitnahmeelementes 22 auf der Stützfläche 20 ab. Die Pufferblöcke 8 sind mit einem Rammbalken 55 fest verbunden, auf dem im geeigneten Abstand Anfahrkissen angebracht sind.

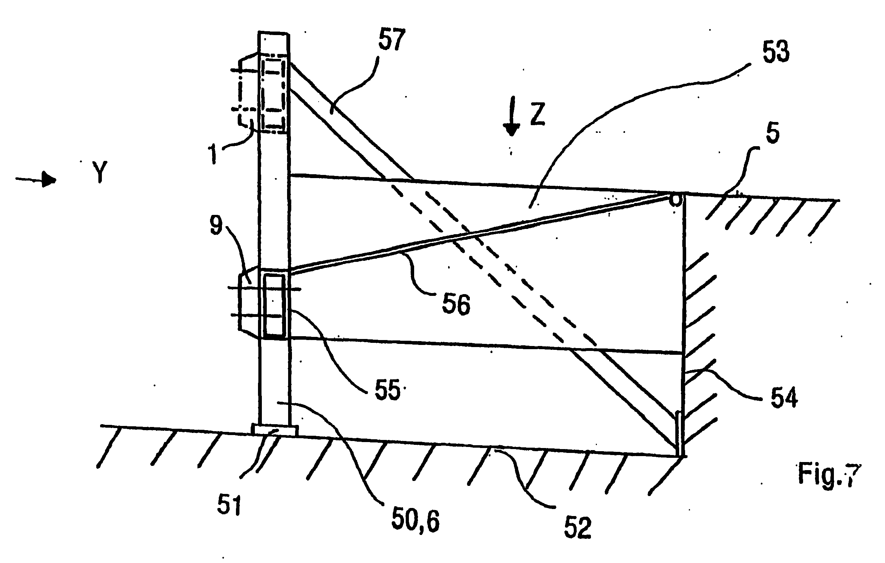

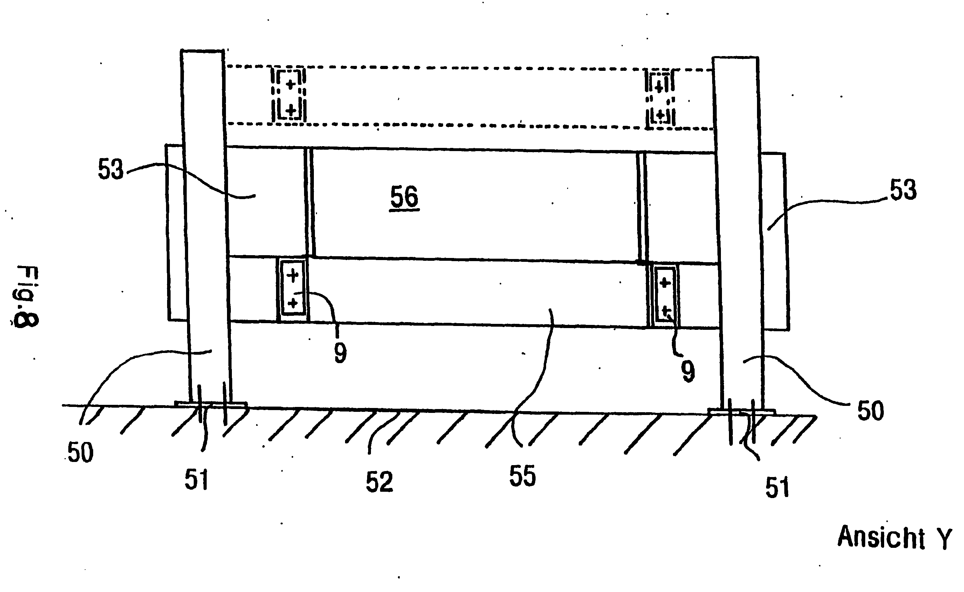

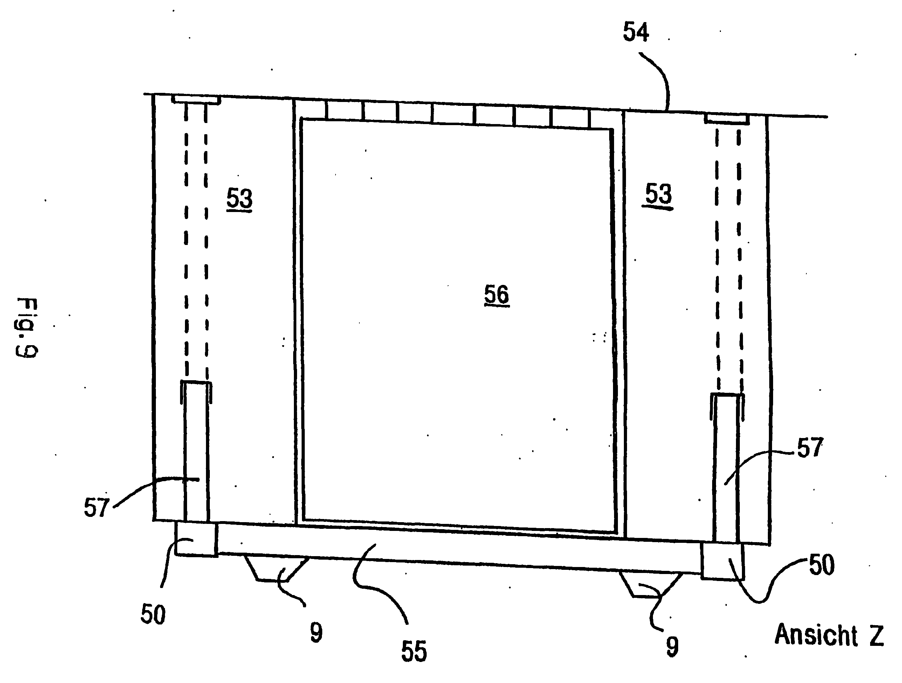

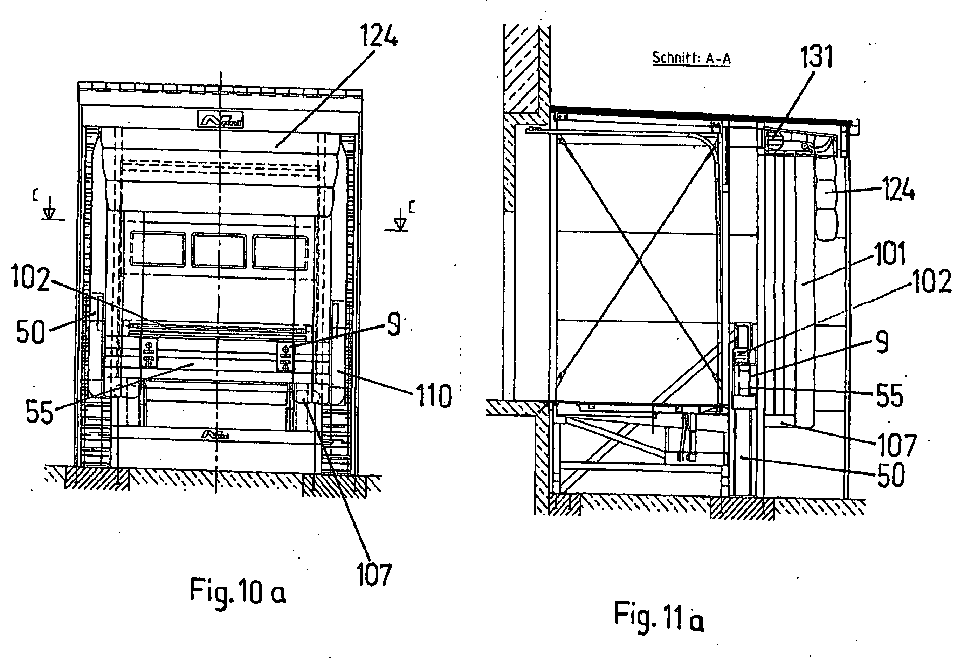

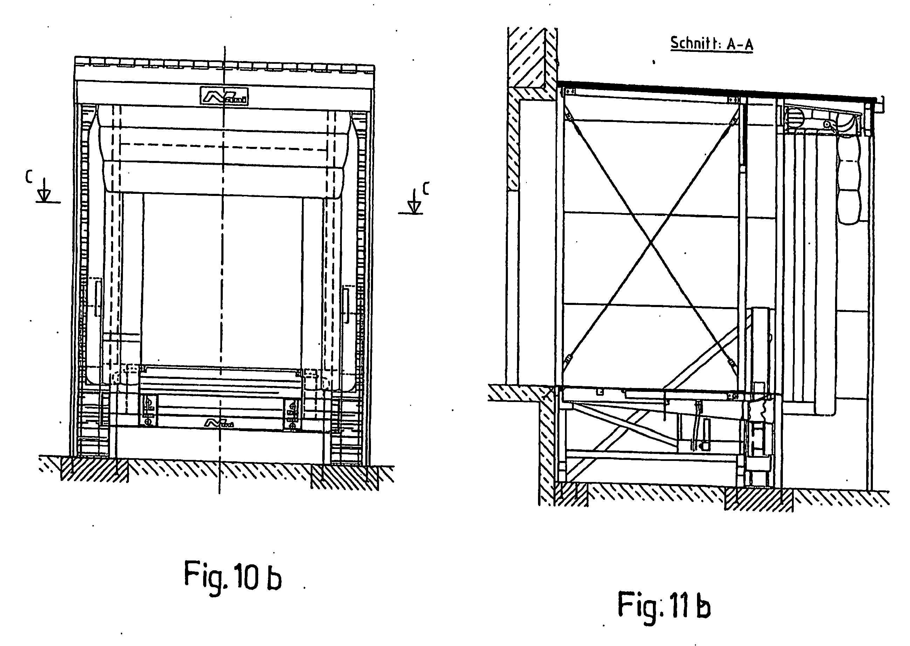

In Figur 7, 8 und 9 ist eine bevorzugte Ausgestaltung als Vertikalschnitt, Frontansicht und Aufsicht dargestellt. Zur Trennung der Ladebucht vom Gebäude, beispielsweise bei einem Kühlhaus, ist eine bekannte Überladebrüdce 56 in einem Podest 53 eingebaut. In der Ruhelage ist die Überladebrücke nach unten geneigt eingestellt. Das Podest 53 kann man sich auch von einer nicht dargestellten Thermoschleuse umbaut denken, wie sie in den Figuren 10 bis 12 gezeigt ist. Ein der Übersichtlichkeit wegen ebenfalls nicht dargestelltes Rolltor kann dabei bis auf die Überladebrücke abgesenkt sein. Zum Schutze des Tores, der Überladebrücke und/oder des Podestes 53 ist vor dem Podest zwischen zwei Stützen 50 ein Rammbalken 55 angeordnet, auf dem zwei Anfahrkissen 9 befestigt sind.

Die Anfahrkissen 9 sind so auf dem höhenverstellbaren Rammbalken 55 angeordnet, dass sie sich seitlich der Überladebrücke befinden. Der Rammbalken 55 selbst ist mit seinen Enden in bzw. an den Säulen 50, z.B. auf die weiter oben beschriebene Weise, höhenverstellbar gelagert Die Säulen haben einen Abstand, der vorzugsweise das Doppelte der LKW-Breite beträgt. Die Säule 50 ist mittels eines Flansches als Fuß 51 mit einem in der Verkehrsfläche 52 vorgesehenen Fundamt verschraubt. Zusätzlich wird das obere Ende der Säule nach hinten von einem schräg nach unten verlaufenden Stützbalken 57 gegen die Gebäudewand 54 oder auf dem Niveau der Verkehrsfläche abgestützt. Die beim Anfahren der Konstruktion auftretenden Anfahrkräfte können so getrennt vom Podest oder von der Gebäudekonstruktion in eine geeignete Fundamentierung geleitet werden.

Üblicherweise steht der Rammbalken beim Andocken eines LKW in seiner oberen Ruhelage. Die Überladebrücke ist dann in ihrer unteren Ruhelage. In dieser Lage bildet der Rammbalken eine Absturzsicherung für auf der Überladebrücke befindliche Ladegeräte wie Gabelstapler. Anschließend wird das Tor geöffnet und der Rammbalken in seine untere Position gefahren. Die LKW-Tür kann dann ohne störenden Anfahrschutz geöffnet werden sowie die Plattform der Überladebrücke angehoben und auf die Ladefläche des LKW aufgelegt werden. Sollte die Überladebrücke die gesamte Breite eines LKW überspannen, so verhindert der durchgehende und breiter als die Gesamtbreite des LKW ausgebildete Rammbalken eine Beschädigung der Überladebrücke.

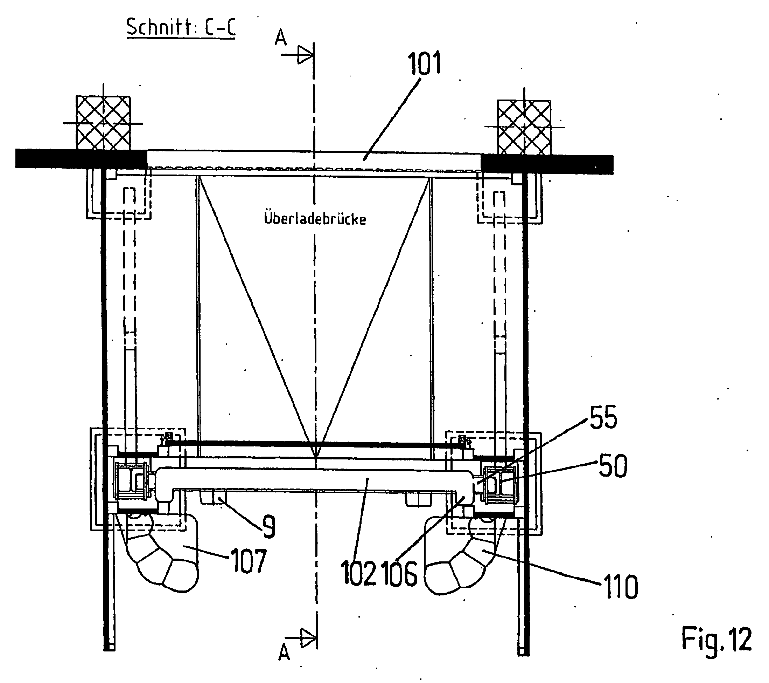

Aus den in den Figuren 11 und 12 dargestellten Ansichten, der Vorderansicht, einem Vertikalschnitt und einem Horizontalschnitt einer Thermoschleuse, ist erkennbar, dass die sonst systembedingten vertikalen und horizontalen Querschnitte der Öffnung zwischen der Brückenplatte 116 bzw. dem Gebäude und dem Fahrzeug durch die erfindungsgemäße Dichtung in Kombination mit dem Anfahrschutz wesentlich verringern lassen bzw. diese Öffnung vollkommen schließen.

In Figur 11, die einen Vertikalschnitt durch die Thermoschleuse darstellt, ist deutlich der liegend eingebaute IPB-Träger erkennbar, der als Rammbalken 55 dient. Darauf ist das aufblasbare Dichtungsteil 102 angeordnet In dieser oberen Schutzposition des Rammbalkens ist das Dichtungsteil 102 zusammengefallen, das durch ein nicht dargestelltes eigenes Gebläse in der unteren Stellung des Rammbalkens 55 dann in seine zur Überladebrücke dichtende Position gefahren wird. Die seitlich und oberhalb der Gebäudeöffnung angeordneten aufblasbaren Dichtungen 124 und 110 werden vom Gebläse 131 versorgt.

In Figur 12 ist die Dichtungssituation in einem Horizontalschnitt als Detail dargestellt. Deutlich erkennbar ist, wie beispielsweise das erfindungsgemäße aufblasbare Dichtungsteil 102 an den Enden freie Schenkel 106 aufweist, die in Richtung eines dreieckförmigen Teils 107 des seitlich aufblasbaren Dichtungsteils 110 weisen.

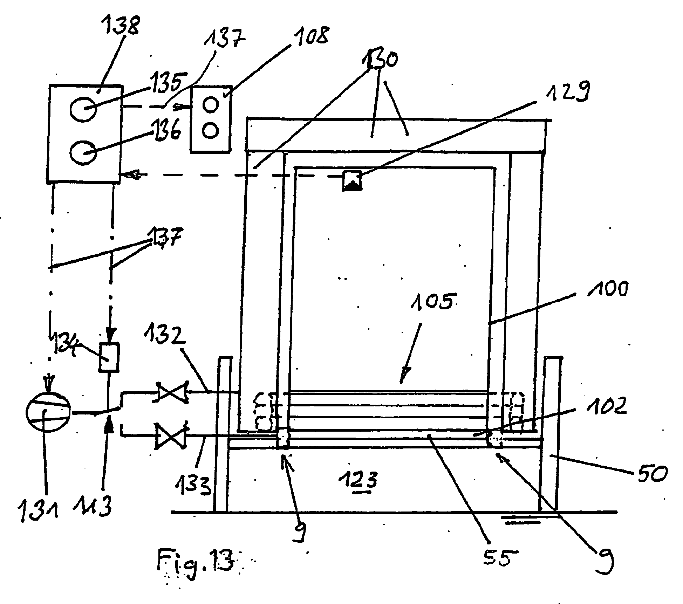

In Figur 13 ist schematisch die Luftversorgung des Dichtungsteils dargestellt Um die Gebäudeöffiung 101 sind seitlich und oberhalb der Gebäudeöffnung 100 bekannte aufblasbare Wulstdichtungen 130 vorgesehen. Diese Wulstdichtungen 130 werden von einem Gebläse 131 Ober eine Luftversorgungsleitung 132 vom Gebläse mit Luft entsprechenden Drucks beaufschlagt. Sie legen sich dadurch an das Profil eines herangefahrenen LKW an. Zusätzlich ist das aufblasbare Dichtungsteil 102 oberhalb des Rammbalkens 55 gezeigt, das durch eine zweite Luftversorgungsleitung 133 gespeist wird.

Mittels einer Umschaltklappe 113 kann wahlweise die Luftversorgung der Wulstdichtung 130 oder Ober Leitung 133 das aufblasbare Dichtungsteil 102 vom Gebläse 131 versorgt werden.

Selbstverständlich können alternativ auch zwei Gebläse vorgesehen werden, die den einzelnen Dichtungen zugeordnet sind. Eine Steuerung 138, die zum Ansteuern der Überladebrücke vorgesehen ist, hat zusätzlich geeignete Ausgänge und Wirkverbindungen 137, um das Gebläse 131 oder alternativ den Antrieb 134 der Umschaltklappe 113 in Betrieb zu setzen oder ggf. eine Ampel 108 zu schalten, die mit rotem oder grünem Signal der Betriebszustand dem Fahrer eines LKW anzeigt.

Ist beispielsweise ein LKW an die Öffnung 100 herangefahren, so wird der Taster 135 von einer Bedienperson gedrückt, um den Befehl zum Heben der Brücke durch die Steuerung zu erteilen. Um wirksam zu werden, muß der Sensor 129 zunächst den angedockten LKW erkannt haben. Die Steuerung fährt dann den Rammbalken 55 in seine untere Ruhelage, erst dann schwenkt die Steuerung die Überladebrücke in ihre obere Position und fährt die Verlängerung aus. Nach Erreichen des ausgefahrenen Zustandes oder nach Loslassen des Tasters 135 wird die Verlängerung auf die Ladefläche des LKW abgesenkt. Gleichzeitig wird ein Zeitzähler in Gang gesetzt, der nach Ablauf von beispielsweise 10 Sekunden dann über die Wirkverbindung 137 das Gebläse 131 in Betrieb setzt, um die Wulstdichtungen bzw. je nach Stellung der Umschaltklappe das Dichtelement 102 aufzublasen.

Wird nach Beendigung des Ladevorgangs der Taster 136 von einer Person gedrückt, um den Befehl zur Rückkehr in die Ruhelage der Überladebrücke zu erteilen, so wird gleichzeitig wieder ein Zähler in Gang gesetzt, der den Befehl für die Brücke erst nach Ablauf von beispielsweise 10 Sekunden gibt. Mit den Drücken des Tasters 136 wird aber sofort das Gebläse 131 still gesetzt, so dass die Dichtungsteile in sich zusammenfallen, bevor die Überladebrücke in ihre Ruhelage zurückkehrt

Anschließend wird, sofern der Sensor 129 keinen LKW mehr erkennt, der Rammbalken 55 in seine obere Schutzposition gefahren und nach Erreichen dieser Lage die Ampel 108 auf grün gestellt.

Auf diese Weise ist ein sehr effizienter und betriebssicherer Anfahrschutz mit einer Dichtung geschaffen worden, bei dem die verbliebenen Öffnungen zwischen LKW und Gebäude zuverlässig in bisher unerreichbarer Weise abgedichtet sind.

### BEZUGSZEICHENLISTE

- 1.: Anfahrschutz
- 2.: LKW
- 3.: Gebäude
- 4.: Tür
- 5.: Rampenkante
- 6.: feste Baugruppe
- 7.: bewegliche Baugruppe
- 8.: Pufferblock
- 9.: Anfahrkissen
- 10.: Kolbenstange
- 11.: Kolben-Zylinder-Antrieb
- 12.: horizontale Stellwegkomponente
- 13.: vertikale Stellwegkomponente
- 14.: aufwärts gerichteter Verstellweg
- 15.: abwärts gerichteter Verstellweg
- 16.: Abstand
- 17.: Montageebene
- 18.: Montagerahmen
- 19.: Führungsschablone
- 20.: Stützfläche
- 21.: Mitnahmeöffnung
- 22.: Mitnahmeelement
- 23.: Stoßfläche
- 24.: Mittelachse
- 25.: Verbindung
- 26.: Schwenklager
- 27.: Zylinder
- 28.: Platte
- 29.: Hydraulikschlauch
- 30.: Schräge
- 31.: Drehmomentstütze
- 32.: Schräge
- 33.: Schräge
- 34.: Seitenteil
- 35.:
- 36.:
- 37.: obere Endlage
- 38.: zweiter Kolben-Zylinder-Antrieb
- 39.: Auffahrkeilkombination
- 40.:
- 41.:
- 42.: Feder
- 43.: Linearführung
- 44.: Langloch
- 45.:
- 46.:
- 47.:
- 48.:
- 49.:
- 50.: Säule
- 51.: Fuß
- 52.: Verkehrsfläche
- 53.: Podest
- 54.: Gebäudewand
- 55.: Rammbalken
- 56.: Überladebrücke
- 57.: Stützbalken
- 101.: Gebäudeöffnung
- 102.: Dichtungsteil
- 103.:
- 104.:
- 105.: Überladebrücke
- 106.: freier Schenkel
- 107.: dreieckförmiges Dichtteil
- 108.: Ampel
- 109.:
- 110.: aufblasbares Dichtungsteil
- 111.:
- 112.:
- 113.: Umschaltklappe
- 114.:
- 115.:
- 116.: Brückenplatte
- 117.: Verkehrsfläche
- 118.: Gebäudewand
- 119.: Schwenkachse
- 120.: Verlängerung
- 121.:
- 122.: freie Schenkel
- 123.: Tasche
- 124.: oberster Wulst
- 125.:
- 126.:
- 127.:
- 128.:
- 129.: Sensor
- 130.: Wulstdichtungen
- 131.: Gebläse
- 132.: Luftversorgungsleitung
- 133.: Luftversorgungsleitung
- 134.: Antrieb
- 135.: Taster Heben
- 136.: Taster Rückkehr
- 137.: Wirkverbindung
- 138.: Steuerung

## Patentansprüche

1. Höhenverstellbarer Anfahrschutz, insbesondere zum Schutz von Fassaden beim Andocken von Fahrzeugen an Gebäudeöffnungen, bestehend aus einem ortsfestem Montagerahmen und einem höhenverstellbaren Pufferblock für eine Verladerampe oder eine Überladelbrücke, wobei der Pufferblock als ein im wesentlichen horizontaler Rammbalken (55), insbesondere mit mindestens einem Anfahrkissen (9) ausgebildet ist, der im Bereich seiner Enden höhenverstellbar gelagert ist, **dadurch gekennzeichnet, dass** der Rammbalken (55) an zwei beabstandeten, vorzugsweise als Säulen (50) ausgebildeten, ortsfesten Montagerahmen höhenverstellbar gelagert ist und einen Verstellweg aufweist, der sowohl eine horizontale (12) als auch vertikale (13) Stellwegkomponente aufweist, wobei insbesondere der aufwärts gerichtete Verstellweg (14) auf mindestens einem Teil des Weges einen größeren Abstand (16) zu einer vertikalen Montageebene (17) aufweist als der abwärts gerichtete Verstellweg (15).

2. Höhenverstellbarer Anfahrsehutz nach Anspruch 1, **dadurch gekennzeichnet, dass** der Montagerahmen (18) feststehend ausgebildet ist und eine Führungsschablone (19) aufweist, an der sich zwei vertikal beanstandete veränderbare Stützflächen (20) einer lageveränderlichen Baugruppe (7) abstützen, wobei insbesondere die lageveränderüche Baugruppe (7) aus dem Pufferblock (8) und einem Teil eines Linearantriebs (10) gebildet ist, und wobei vorzugsweise eine Stützfläche (20) oder beide am Pufferblock (8) angeordnet sind.

3. Höhenverstellbarer Anfahrschutz nach Anspruch 1 oder 2, **dadurch gekennzeichnet, dass** der Pufferblock (8) eine Mitnahmeöffnung (21) aufweist, die in vertikaler Richtung größer als in horizontaler Richtung ausgebildet ist und in der ein Mitnahmeelement (22) eingreifend angeordnet ist, das eine Verbindung (25) zum beweglichen Teil (10) des Stellantriebs (11) aufweist und insbesondere eine Stützfläche (20) als Drehmomentsstütze (31) einer auf den Pufferblock (8) ausgeübten Anfahrkraft ausgebildet ist, und/oder der Pufferblock eine Stossfläche (23) aufweist, deren Mittelachse (24) oberhalb der Mitnahmeöffnung (21) angeordnet ist.

4. Höhenverstellbarer Anfahrschutz Anspruch 1, 2 oder 3, **dadurch gekennzeichnet, dass** der Antrieb (11) des Anfahrpuffers (1) eine Wirkverbindung zu einer Steuerung aufweist, der vorzugsweise das Signal eines Sensors zur Erkennung eines angedockten Fahrzeugs ausgeschaltet ist.

5. Höhenverstellbarer Anfahrschutz Anspruch 1, 2, 3 oder 4, **dadurch gekennzeichnet, dass** der Abstand der Säulen (50) größer als der Abstand der Anfahrkissen (9) ist, vorzugsweise größer als die doppelte Breite eines LKW (2).

6. Höhenvarstellbarer Anfahrschutz Anspruch 1, 2, 3, 4 oder 5, **dadurch gekennzeichnet, dass** die Säulen (50) an ihrem unteren Ende (51) auf der Verkehrsfläche (52) befestigt sind, wobei vorzugsweise die Säulen (50) im Bereich ihres oberen Endes durch einen Stützbalken (57) nach hinten abgestützt ausgebildet sind, der seinerseits vorzugsweise auf der Verkehrsfläche (52) und/oder an einem Gebäudefundament (54) befestigt ist.

7. Höhenvarstellbarer Anfahrschutz einem oder mehreren der vorhergegangenen Ansprüche 1 bis 6, **dadurch gekennzeichnet, dass** der Rammbalken ein Dichtungsteil (102), vorzugsweise verstellbares, insbesondere aufblasbares, aufweist, wobei das Dichtungsteil einen Spalt zwischen dem Rammbalken (55) und der Überladebrücke (105) überbrückend ausgebildet ist.

8. Höhenverstellbarer Anfahrschutz nach Anspruch 7, **dadurch gekennzeichnet, dass** das Dichtungsteil (102) in der Aufsicht U-förmig ausgebildet ist und/oder vorzugsweise mit seinen freien Schenkeln in Gegenrichtung zum Tor zeigend ausgebildet ist.

9. Höhenverstellbarer Anfahrschutz nach einem oder mehreren dervorhergehenden Ansprüche, **dadurch gekennzeichnet, dass** das Dichtungsteil (102) breiter als die in der Gebäudeöffnung vorgesehene Überdebrücke (105) ausgebildet ist.

10. Höhenverstellbarer Anfahrschutz einem oder mehreren der vorhergehenden Ansprüche, **dadurch gekennzeichnet, dass** weitere Dichtungstelle (110), vorzugsweise aufblasbare Dichtungsteile (110), seitlich und oberhalb der Gebäudeöffnung (101) angeordnet sind, so dass die Gebäudeöffnung allseitig umschlossen ist.

11. Höhenversstellbarer Anfahrschutz nach einem oder mehreren der vorhergehenden Ansprüche, **dadurch gekennzeichnet, dass** das Dichtungateil (102) ein Luftgebläse (131) mit einer Luftversorgungsleitung (133) für das Dichtungsteil (102) aufweist, wobei das Gebläse insbesondere reversierbar ausgebildet ist.

12. Höhenversstellbarer Anfahrschutz nach einem oder mehreren der vorhergehenden Ansprüche, **dadurch gekennzeichnet, dass** das Gebläse (131) Ober eine Wirkverbindung (137) mit einer Steuerung (138) der Überladebrücke (105) verbunden ist, wobei die Steuerung (138) eine Anwesenheit eines LKW detektierend ausgebildet ist.

13. Verfahren zum Betrieb eines Anfahrschutzes, **dadurch gekennzeichnet, dass** der Anfahrschutz selbsttätig in seine obere Schutzlage fahrt, sobald eine Überladebrücke ihre Ruhelage erreicht hat und ein LKW sich nicht mehr in der Andockposition befindet, und einem Verstellweg aufweist; der sowohl eine horizontale (12) als auch vertikale (13) Stellwegkomponente aufweist

14. Verfahren zum Betrieb eines Anfahrschutzes gemäß Anspruch 13 vorzugsweise mit einem Dichtungsteil (102) gemäß einem oder mehreren der vorhergehenden Anspreche, **dadurch gekennzeichnet, dass** der Anfahrschutz erst nach einem Andocken eines Fahrzeugs an die Gebäudeöffnung (101) aus einer Ruhelage in eine untere Endlage gefahren wird.

15. Verfahren nach Anspruch 14, **dadurch gekennzeichnet, dass** das Startsignal für das untere Dichtelement (102) zum Anfahren der Dichtposition von der Steuerung erzeugt wird, vorzugsweise der Überladebrückensteuerung (13), erst wenn die Betriebsposition der Überladebrücke (5) erreicht ist, insbesondere nach Ablauf einer Zeitspanne.

16. Verfahren nach Anspruch 14 oder 15, **dadurch gekennzeichnet, dass** von der überladebrückesteuerung (13) nach Betätigen eines Befehles zur Rückkehr der Überladebrücke in ihre Ruhelage zuerst das Signal zum Rückfahren des unteren Dichtungsteils (102) in die Ruhelage und dann die Überladebrücke erst nach Ablauf einer für ein Zusammenfallen der Dichtung ausreichenden Zeitspanne in ihre Ruhelage zurückkehrt, wobei vorzugsweise das Rückfahren des Dichtungsteils in die Ruhelage durch Umkehrung des Gebläses (11) erfolgt

## Claims

1. A height-adjustable impact protector, especially to protect facades when vehicles are docking at building openings, consisting of a stationary mounting frame and a height-adjustable buffer block for a loading ramp or a loading bridge, whereby the buffer block is configured as an essentially horizontal bumper bar (55), especially with at least one impact cushion (9), which is mounted so as to be height-adjustable in the area of its ends, **characterized in that** the impact bar (55) is mounted so as to be height-adjustable on two spaced, stationary mounting frames that are preferably configured as columns (50), said impact bar (55) having an adjustment path with a horizontal (12) as well as a vertical (13) adjustment path component, whereby especially the upwards-facing adjustment path (14), over at least part of the path, is at a greater distance (16) from a vertical mounting plane (17) than the downwards-facing adjustment path (15).

2. The height-adjustable impact protector according to Claim 1, **characterized in that** the mounting frame (18) is configured to be stationary and to have a guide template (19) on which two vertically spaced, variable support surfaces (20) of a position-adjustable component (7) are supported, whereby especially the position-adjustable component (7) is made up of the buffer block (8) and part of a linear drive (10), and whereby preferably one support surface (20) or both are arranged on the buffer block (8).

3. The height-adjustable impact protector according to Claim 1 or 2, **characterized in that** the buffer block (8) has a carry-along opening (21) that is configured to be larger in the vertical direction than in the horizontal direction, and in which a carry-along element (22) is arranged so as to engage with it, said element (22) having a connection (25) to the movable part (10) of the control drive (11), and especially a support surface (20) is configured as a torque support (31) for an impact force exerted on the buffer block (8), and/or the buffer block has a collision surface (23) whose middle axis (24) is arranged above the movable opening (21).

4. The height-adjustable impact protector according to Claim 1, 2 or 3, **characterized in that** the drive (11) of the impact buffer (1) is operatively connected to a control unit to which the signal of a sensor for detecting a docked vehicle is preferably applied.

5. The height-adjustable impact protector according to Claim 1, 2, 3 or 4, **characterized in that** the distance of the columns (50) is greater than the distance of the impact cushions (9), preferably greater than twice the width of a truck (2).

6. The height-adjustable impact protector according to Claim 1, 2, 3, 4 or 5, **characterized in that** the lower ends (51) of the columns (50) are attached to the road surface (52), whereby preferably the columns (50) are configured to be supported towards the back in the area of their upper end by means of a support bar (57) that, in turn, is preferably attached to the road surface (52) and/or to a building foundation (54).

7. The height-adjustable impact protector according to one or more of the preceding Claims 1 to 6, **characterized in that** the impact bar has a sealing part (102) that is preferably adjustable, especially inflatable, whereby the sealing part is configured so as to bridge a gap between the impact bar (55) and the loading bridge (105).

8. The height-adjustable impact protector according to Claim 7, **characterized in that** the sealing part (102) is configured to be U-shaped as seen from the top and/or is preferably configured with its free legs pointing in the opposite direction from the gate.

9. The height-adjustable impact protector according to one or more of the preceding claims, **characterized in that** the sealing part (102) is configured to be wider than the loading bridge (105) that is provided in the building opening.

10. The height-adjustable impact protector according to one or more of the preceding claims, **characterized in that** additional sealing parts (110), preferably inflatable sealing parts (110), are arranged next to and above the building opening (101), so that the building opening is enclosed on all sides.

11. The height-adjustable impact protector according to one or more of the preceding claims, **characterized in that** the sealing part (102) has an air blower (131) with an air supply line (133) for the sealing part (102), whereby the blower is especially configured so as to be reversible.

12. The height-adjustable impact protector according to one or more of the preceding claims, **characterized in that** the blower (131) is connected to a control unit (138) of the loading bridge (105) via an operative connection, whereby the control unit (138) is configured to detect the presence of a truck.

13. A method for the operation of an impact protector, **characterized in that** the impact protector autonomously moves into its upper protection position as soon as a loading bridge has reached its resting position and a truck is no longer located in the docking position and having an adjustment path which has a horizontal (12) as well as a vertical (13) adjustment path component.

14. The method for the operation of an impact protector according to Claim 13, preferably with a sealing part (102) according to one or more of the preceding claims, **characterized in that** the impact protector is only moved into a lower final position once a vehicle has docked at the building opening (101).

15. The method according to Claim 14, **characterized in that** the starting signal for the lower sealing element (102) to move to the sealing position is only generated by the control unit, preferably by the loading bridge control unit (13), once the operating position of the loading bridge (5) has been reached, especially after a certain period of time has elapsed.

16. The method according to Claim 14 or 15, **characterized in that**, after a command has been given for the loading bridge to return to its resting position, the loading bridge control unit (13) first emits the signal for the lower sealing part (102) to return to the resting position, and then for the loading bridge to return to its resting position only after a period of time has elapsed that is sufficient for the sealing element to collapse, whereby preferably the return of the sealing part into the resting position is effectuated by reversing the blower (11).

## Revendications

1. Protection anti-tamponnement réglable en hauteur, destinée notamment à protéger les façades lors de la mise à quai de véhicules à des ouvertures de bâtiments, consistant en un cadre de montage fixe et un bloc butoir réglable en hauteur pour une rampe de chargement ou un pont de transbordement, le bloc butoir étant conçu comme barre de butée (55) essentiellement horizontale laquelle comporte au moins un coussin de tamponnement (9) et est logée dans la zone de ses extrémités de façon réglable en hauteur, **caractérisée en ce que** la barre de butée (55) est logée de façon réglable en hauteur sur deux cadres de montage fixes écartés l'un de l'autre et conçus de préférence comme colonnes (50) et présente un parcours de déplacement comportant une composante de déplacement aussi bien horizontale (12) que verticale (13), le parcours de déplacement dirigé vers le haut (14) présentant, sur au moins une partie de son chemin, un écart (16) par rapport à un plan de montage vertical (17) plus grand que le parcours de déplacement dirigé vers le bas (15).

2. Protection anti-tamponnement réglable en hauteur selon la revendication 1, **caractérisée en ce que** le cadre de montage (18) est monté de façon fixe et présente un guide-gabarit (19) contre lequel s'appuient deux faces d'appui (20) verticales et modifiables d'un ensemble (7) à position variable composé notamment du bloc butoir (8) et d'une partie de l'entraînement linéaire (10), l'une des surfaces d'appui (20) de préférence ou toutes les deux étant disposées sur le bloc butoir (8).

3. Protection anti-tamponnement réglable en hauteur selon la revendication 1 ou 2, **caractérisée en ce que** le bloc butoir (8) présente un orifice d'entraînement (21) qui est plus grand dans le sens vertical que dans le sens horizontal et dans lequel s'engrène un élément d'entraînement (22) qui présente un raccord (25) à la partie mobile (10) de l'actionneur (11) et que, en particulier, une surface d'appui (20) est conçue comme support de couple (31) d'une force de tamponnement exercée sur le bloc butoir (8), et/ou le bloc butoir présente une surface de tamponnement (23) dont l'axe médian (24) est disposé au-dessus de l'orifice d'entraînement (21).

4. Protection anti-tamponnement réglable en hauteur selon la revendication 1, 2 ou 3, **caractérisé en ce que** l'entraînement (11) de la protection anti-tamponnement (1) présente une liaison active avec une commande, à laquelle est appliqué de préférence le signal d'un capteur destiné à détecter un véhicule mis à quai.

5. Protection anti-tamponnement réglable en hauteur selon la revendication 1, 2, 3, 4 ou 5, **caractérisé en ce que** l'écart des colonnes (50) est plus grand que l'écart des coussins de tamponnement (9), de préférence supérieur à la double largeur d'un camion (2).

6. Protection anti-tamponnement réglable en hauteur selon la revendication 1, 2, 3, 4 ou 5, **caractérisée en ce que** les extrémités inférieures (51) des colonnes (50) sont fixées sur la surface de circulation (52), les colonnes (50), dans la zone de leurs extrémités supérieures, étant de préférence soutenues vers l'arrière par une poutre de support (57) laquelle est fixée de préférence sur la surface de circulation (52) et/ou sur la fondation d'un bâtiment (54).

7. Protection anti-tamponnement réglable en hauteur selon l'une ou plusieurs des revendications précédentes 1 à 6, **caractérisé en ce que** la barre de butée présente une pièce d'étanchéité (102) de préférence variable, en particulier gonflable, qui est conçue pour fermer une fente entre la barre de butée (55) et le pont de transbordement (105).

8. Protection anti-tamponnement réglable en hauteur selon la revendication 7, **caractérisée en ce que** la pièce d'étanchéité (102), vue par dessus, se présente en forme de U et/ou que ses branches libres sont dirigées de préférence dans le sens contraire à la porte.

9. Protection anti-tamponnement réglable en hauteur selon l'une ou plusieurs des revendications précédentes, **caractérisée en ce que** la pièce d'étanchéité (102) est plus large que le pont de transbordement (105) prévu dans l'ouverture du bâtiment.

10. Protection anti-tamponnement réglable en hauteur selon l'une ou plusieurs des revendications précédentes, **caractérisée en ce que** d'autres pièces d'étanchéité (110), de préférence gonflables (110), sont diposées latéralement et au-dessus de l'ouverture du bâtiment (101), de sorte que cette dernière est entourée sur tout son pourtour.

11. Protection anti-tamponnement réglable en hauteur selon l'une ou plusieurs des revendication précédentes, **caractérisée en ce que** la pièce d'étanchéité (102) présente une soufflante d'air (131) dotée d'une conduite d'amenée d'air pour la pièce d'étanchéité (102), ladite soufflante pouvant être inversée.

12. Protection anti-tamponnement réglable en hauteur selon l'une ou plusieurs des revendication précédentes, **caractérisée en ce que** la soufflante (131) est reliée à une commande (138) du pont de transbordement (105) via une liaison active (137), la commande (138) étant conçue de façon à détecter la présence d'un camion.

13. Procédé pour l'exploitation d'une protection anti-tamponnement, **caractérisé en ce que** la protection anti-tamponnement se déplace automatiquement dans sa position de protection supérieure dès qu'un pont de transbordement a atteint sa position de repos et qu'aucun camion n'est plus mis à quai et présente un parcours de déplacement comportant une composante de déplacement aussi bien horizontale (12) que verticale (13).

14. Procédé pour l'exploitation d'une protection anti-tamponnement selon la revendication 13, de préférence avec une pièce d'étanchéité (102) selon l'une ou plusieurs des revendications précédentes, **caractérisé en ce que** la protection anti-tamponnement ne se déplace d'une position de repos dans une position finale inférieure que lorsqu'un véhicule se trouve en contact avec l'ouverture du bâtiment (101).

15. Procédé selon la revendication 14, **caractérisé en ce que** le signal déclenchant le déplacement de l'élément d'étanchéité inférieur (102) vers la position d'étanchement n'est généré par la commande, de préférence par la commande du pont de transbordement (13) que lorsque le pont de transbordement ait atteint sa position opérationnelle (5), ceci en particulier après l'écoulement d'un certain laps de temps.

16. Procédé selon la revendication 14 ou 15, **caractérisé en ce que**, après avoir actionné une commande pour le retour du pont de transbordement dans sa position de repos, la commande du pont de transbordement (13) donne d'abord le signal pour le retour de la pièce d'étanchéité inférieure (102) dans sa position de repos, et le pont de transbordement ne retourne dans sa position de repos qu'après un laps de temps nécessaire au dégonflement de la pièce d'étanchéité, le retour de la pièce d'étanchéité dans sa position de repos s'effectuant de préférence par l'inversion de la soufflante (11).
